Europäisches Patentamt

European Patent Office

Office européen des brevets

(19)

(11) Publication number: **0 182 565**
**B1**

(12) # EUROPEAN PATENT SPECIFICATION

(45) Date of publication of patent specification: **12.07.89**

(51) Int. Cl.⁴: **E 21 D 21/00**

(21) Application number: **85308180.0**

(22) Date of filing: **11.11.85**

(54) Anchoring bolt.

(30) Priority: **10.11.84 GB 8428468**

(43) Date of publication of application:
**28.05.86 Bulletin 86/22**

(45) Publication of the grant of the patent:
**12.07.89 Bulletin 89/28**

(84) Designated Contracting States:
**BE CH DE FR IT LI NL SE**

(56) References cited:
**CH-A- 341 185**
**FR-A-1 152 933**
**FR-A-1 169 846**
**FR-A-1 178 019**
**FR-A-1 342 215**
**FR-A-1 391 068**
**FR-A-1 573 479**
**GB-A-2 137 712**

(73) Proprietor: **Adams, Hayden John**
**14 Presteigne Avenue Ton-Teg**
**Pontypridd Mid-Glamorgan CF38 1LE (GB)**

(73) Proprietor: **Edwards, William John**
**High Bank Pen-y-Lan Road Argoed**
**Blackwood Gwent NP2 0AZ (GB)**

(72) Inventor: **Adams, Hayden John**
**14 Presteigne Avenue Ton-Teg**
**Pontypridd Mid-Glamorgan CF38 1LE (GB)**
Inventor: **Edwards, William John**
**High Bank Pen-y-Lan Road Argoed**
**Blackwood Gwent NP2 0AZ (GB)**

(74) Representative: **Austin, Hedley William et al**
**Urquhart-Dykes & Lord Alexandra House 1**
**Alexandra Road**
**Swansea West Glamorgan SA1 5ED (GB)**

Courier Press, Leamington Spa, England.

## Description

This invention is concerned with bolts which enable the end of a rod to be anchored at a position deep within a bore. When an anchoring bolt is to be located to some depth within a bore it may be impossible to insert a tool to act on the bolt itself in order to secure it in position and the only means of tightening the anchoring bolt is then by rotation of the rod itself. Means do however have to be provided to ensure that the anchoring bolt does not slip within the bore whilst the tightening operation is being carried out.

FR-A-1169846 discloses an assembly which enables a threaded end of a bolt to be anchored within a bore in rock or similar material in mines or the like. The anchoring assembly comprises expandable means positioned between a stop member and a threaded member screwed onto the threaded end. The threaded end also has a securing member with resilient projections extending beyond the circumferential periphery of the expandable means in the unexpanded condition of the latter, the projections being such that they restrain rotation of the threaded member when the threaded end of the bolt is located within a bore just large enough to receive the expandable means.

According to the present invention, there is provided an improvement in this general type of assembly, in which the securing member comprises a relatively thin metal tube having longitudinal slits, the tube being compressed so that portions of metal between the slits project outwardly as spring-like projections so as to restrain the threaded member against rotation in the bore. The use of such a securing member enables the relevant parts of the bolt assembly to be held against rotation while a tightening operation is carried out by rotation of the bolt.

The spring-like projections will grip within the bore, yet can be compressed as the bolt is pushed into a desired position within the bore.

In a preferred arrangement, the metal tube will be situated about the threaded member and will be either frictionally or positively attached thereto.

The expandable means is typically a tubular sleeve, which preferably incorporates longitudinally extending slits such that the material between the slits will be forced outwardly by frusto-conical members on the bolt as the threaded member is tightened towards the stop member. In one arrangement, the slits will extend alternately from opposite ends of the tube and may be enlarged at least in the central area of the tube. Other possibilities for the expandable sleeve include tubes having longitudinally extending slits opening at one end only of the tube and a coil spring which will be forced outwardly as it is compressed between its ends.

In one arrangement, the stop member will comprise a fixed head or lock nut secured near the free end of the bolt so that the sleeve and threaded member will be disposed inwardly of the free end of the bolt. In a preferred arrangement, the first anchoring assembly is disposed towards the free end of the bolt, with the threaded member carrying the securing member screwed onto the free end of the bolt and the expandable sleeve disposed between the free end and the stop member. The stop member may comprise a nut or lock nut screwed to a limit position on the first threaded end of the bolt or an enlarged flange formed as part of the bolt itself.

A preferred use for the anchoring bolt assembly according to the invention is as part of a tie rod for tying together respective inner and outer skins of a cavity wall. In this case, an anchoring bolt assembly according to the invention is provided at one end of the bolt, and a further assembly, comprising an expandable sleeve positioned between stop member and a tightening nut, is located at the other end of the bolt.

The tightening nut is generally such that it may be rotated directly by a tool as it will be close to the free end of the rod and thus to the exterior of the bore drilled through the two skins of a cavity wall.

The invention may be performed in various ways and preferred embodiments thereof will now be described with reference to the accompanying drawings, in which:-

Figure 1 illustrates the separate parts of an exemplary cavity wall tie rod incorporating an anchoring assembly according to the invention;

Figure 2 is a side view on an enlarged scale of an expandable sleeve and a securing member forming part of the tie rod shown in Figure 1; and

Figure 3 is a side view of an alternative form of the end of a tie rod.

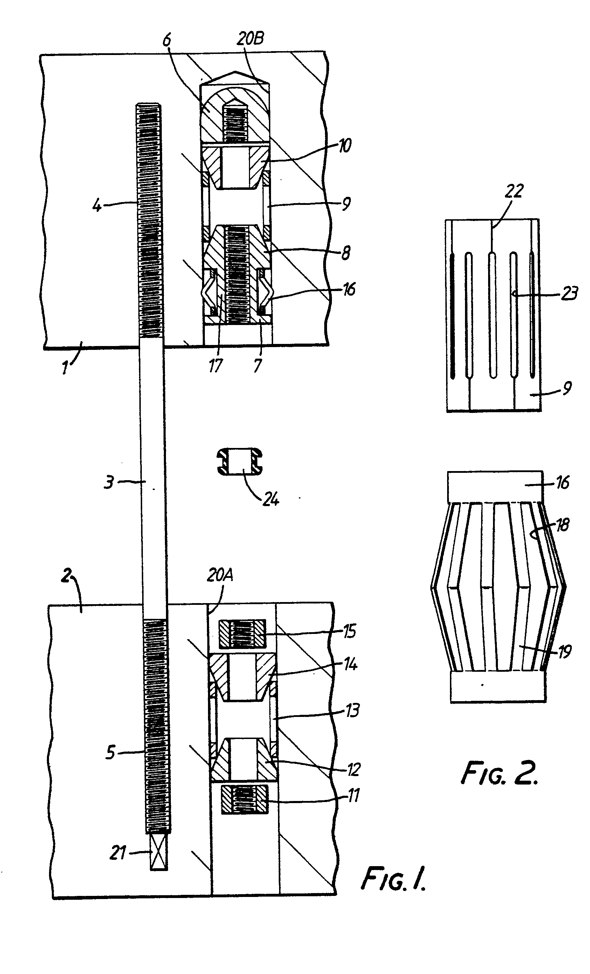

Figure 1 illustrates a cavity wall comprising an inner skin 1 and an outer skin 2, which are to be tied together by means of a tie rod 3. The two ends of the tie rod 3 carry threaded portions 4 and 5. At the end of the portion 4, a head 6 is positively secured, such as by gluing, so as to secure in place, in sequence, a threaded member 7 having a frusto-conical portion 8, a sleeve 9 and a frusto-conical member 10. The other threaded portion 5 similarly carries a sequence of a nut 11, frusto-conical member 12, sleeve 13 and frusto-conical member 14 abutted against a further nut 15 which has been screwed on up to the end of the threaded portion.

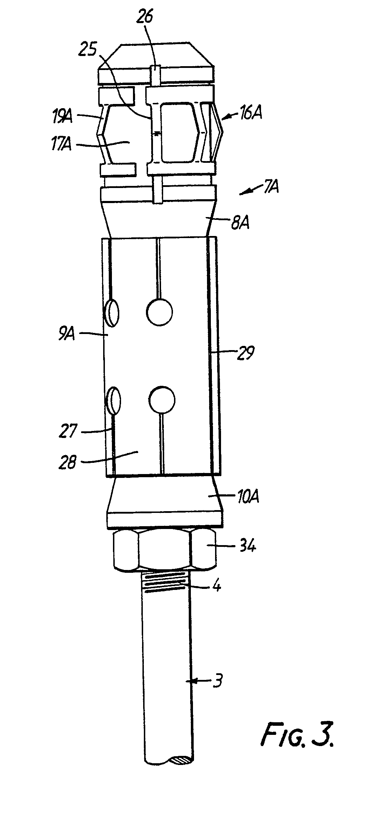

The threaded member 7 has a securing member 16 mounted about a waisted portion 17 of the member 7. As can be seen from Figures 1 and 2 this securing member 16 is in the form of a metal tube having longitudinally extending slits 18 in the central zone. The tube has then been compressed into a permanently stressed state so that ribs 19 project outwardly, much in the form of a child's paper lantern. The securing member 16 is either secured to the member 7 or grips it tightly so that the member 7 cannot rotate if the securing member 16 is held against rotation.

In use a bore 20A, 20B is drilled through the two skins 1 and 2 of the wall, the bore portion 20B being blind. The tie rod 3 is then inserted into the bore until the head 6 reaches the blind end of the bore portion 20B. During this operation the resiliently flexible ribs 19 of the securing member 16 will compress inwardly to enable the anchoring bolt to be pushed home.

The tie rod 3 has a projecting tip 21 (which is of square cross-section) and this is gripped by a spanner so that the rod 3 can be rotated. During this rotation the securing member 16 will bite into the inner walls of the bore 20B and thus prevent rotation of the member 7 within the bore. Hence the member 7 will be caused to travel axially along the threaded portion 4 of the rod 3 so that the conical members 8 and 10 act on the ends of the sleeve 9. As can be seen from Figure 2 this sleeve 9 has alternating slits 22 extending to the two ends of the sleeve. As the conical portions 8 and 10 move towards one another they therefore force out free end portions of the sleeve 9 which will then bite into the internal wall of the bore 20B to fix the anchoring bolt in place in the wall section 1. It will be noted that the slits 22 have enlarged portions 23 in the central region of the sleeve 9 which help to allow the free end parts to splay outwardly.

Once the one anchoring bolt is securely fixed within the wall portion 1 the other anchoring bolt incorporating the sleeve 13 is anchored into the wall section 2 by rotating the nut 11 by means of a spanner so that the conical portions 12 and 14 move towards one another to cause free end portions of the sleeve 13 to splay outwardly into gripping contact with the internal walls of the bore 20A in a manner similar to that for the sleeve 9.

A rubber grommet 24 is positioned on the central portion of the tie rod 3 to act as a barrier for moisture which might tend to travel from one end to the other of the tie bar located in an external wall.

A modified and preferred form of anchoring bolt assembly is illustrated in Figure 3. For simplicity the assembly situated at the outer end of the tie rod 3 only is illustrated but it will be appreciated that an assembly similar to that comprising the parts 11, 12, 13, 14 and 15 as shown in Figure 1 of the drawings will be mounted on the screw-threaded portion 5 at the other end of the tie rod 3. In the arrangement shown in Figure 3 the threaded member 7A is screwed onto the tip of the tie rod 3 and incorporates a conical member 8A which will act together with a further conical member 10A to squeeze an expandable sleeve 9A into the expanded condition as the tie rod 3 is rotated. A nut 34 acts as a stop member for the conical member 10A. The threaded member 7A carries the securing member 16A about a waisted portion 17A. The securing member 16A is formed to provide outwardly projecting ribs 19A although one rib 25 projects inwardly to be received in a longitudinal slot 26 cut into the surface of the waisted portion 17A to hold the securing member 16A against rotation relative to the threaded member 7A.

In use the tie rod 3 is inserted through bore holes drilled through two sections of a wall so that the anchoring bolt assembly is received within the inner bore, the ribs 19A on the securing member 16A gripping the internal wall surface of the bore. The tie rod 3 is then rotated by means of a suitable tool at the end remote from the end carrying the anchoring bolt assembly shown in Figure 3 with the result that the threaded member 7A rides down the threaded portion 4 to cause expansion of the sleeve 9A resulting ultimately in a secure engagement of the anchoring bolt assembly within the bore. As shown in Figure 3 the sleeve 9A incorporates slits 27 extending from either end, the enlarged portions of the slits at the inner ends allowing the intermediate parts 28 to flex readily in the outward direction. A continuous slit 29 is formed at one position in the sleeve 9A.

The other end of the tie rod 3 may be secured within the further bore in the other section of the wall in a manner similar to that described with reference to Figure 1. The sleeve 13 in this case may be of the form as illustrated at 9A in Figure 3.

The provision of the threaded member 7A at the extreme end of the tie rod 3 removes the need for a fixed head secured at the tip of the rod. If desired the stop member comprising the nut 34 could be replaced by a shoulder on the tie rod 3 achieved either by forming the rod with a central section of enlarged diameter or by welding or otherwise securing a washer or sleeve onto the tie rod inwardly of the threaded portion 4.

**Claims**

1. An anchoring bolt assembly comprising an elongate bolt (3) having expandable means (9, 9A) positioned between a stop member (6) and a threaded member (7, 7A) screwed onto a threaded end (4) of said bolt, said threaded end carrying a securing member having resilient projecting portions extending beyond the circumferential periphery of the expandable means in the unexpanded condition of the latter, said projecting portions being such that they restrain rotation of said threaded member when said end is located within a bore just large enough to receive said expandable means, characterised in that said securing member comprises a relatively thin metal tube (16, 16A) having longitudinal slits (18), the tube being compressed so that portions of metal between the slits project outwardly as spring-like portions (19, 19A) constituting said projecting portions.

2. An anchoring bolt assembly according to claim 1, characterised in that the metal tube (16, 16A) is positively or frictionally attached to the threaded member (7, 7A).

3. An anchoring bolt assembly according to claim 1 or 2, characterised in that the expandable means comprises a tubular sleeve (9, 9A) incorporating longitudinally extending slits (22, 27, 29) such that the material (28) between the slits will be forced outwardly by frusto-conical members (8, 10 or 8A, 10A) mounted on the bolt (3), as the threaded member (7, 7A) is tightened towards the stop member (6, 34).

4. An anchoring bolt assembly according to claim 1 or 2, characterised in that the expandable means comprises a tubular sleeve having longitudinally extending slits opening at one end only of the sleeve, or a coil spring arranged to be forced outwardly as it is compressed between its ends.

5. An anchoring bolt assembly according to claim 3, characterised in that said longitudinally extending slits extend alternately from opposite ends of the tube (9, 9A).

6. An anchoring bolt assembly according to claim 5, characterised in that said longitudinally extending slits are enlarged at least in the central area (23) of the tube (9, 9A).

7. An anchoring bolt assembly according to any of claims 1 to 6, characterised in that said stop member comprises a fixed head (6) or lock nut secured near the end (4) of the bolt (3) so that the sleeve (9) and threaded member (7) are disposed inwardly of said end.

8. An anchoring bolt assembly according to any of claims 1 to 7, characterised in that the stop member comprises a nut or lock nut (34) screwed to a limit position on the threaded end (4) of the bolt (3) or an enlarged flange formed as part of the bolt itself.

9. A tie rod for tying together respective inner and outer skins of a cavity wall, said tie rod comprising a first anchoring bolt assembly according to any of claims 1 to 8, and a further assembly at an end of said bolt remote from said first mentioned end, said further assembly comprising an expandable sleeve (13) positioned between a stop member (15) and a tightening nut (11).

**Patentansprüche**

1. Ankerbolzenanordnung, die einen länglichen Bolzen (3) mit ausdehnbaren Mitteln (9, 9A) umfaßt, die zwischen einem Anschlagelement (6) und einem auf ein mit Gewinde versehenes Ende (4) des Bolzens aufgeschraubten Gewindeelement (7, 7A) angeordnet sind, wobei das mit Gewinde versehene Ende ein Sicherungselement trägt, das federnd vorstehende Teile hat, die sich über die Umfangsfläche der ausdehnbaren Mittel im nicht ausgedehnten Zustand derselben hinaus erstrecken, wobei die vorstehenden Teile so sind, daß sie die Drehung des mit Gewinde versehenen Elements hindern, wenn das genannte Ende innerhalb einer Bohrung lokalisiert ist, die gerade groß genug ist, um die ausdehnbaren Mittel aufzunehmen, dadurch gekennzeichnet, daß das Sicherungselement aus einer relativ dünnen Metallröhre (16, 16A) besteht, die Längsschlitze (18) enthält, wobei die Röhre zusammengedrückt ist, so daß Metallteile zwischen den Schlitzen als federähnliche Teile (19, 19A) nach außen vorstehen und die genannten vorstehenden Teile bilden.

2. Ankerbolzenanordnung nach Anspruch 1, dadurch gekennzeichnet, daß die Metallröhre (16, 16A) definitiv oder durch Reibung an dem mit Gewinde versehenen Element (7, 7A) angebracht ist.

3. Ankerbolzenanordnung nach Anspruch 1 oder 2, dadurch gekennzeichnet daß die ausdehnbaren Mittel aus einer rohrförmigen Hülse (9, 9A) bestehen, die sich in Längsrichtung erstreckende Schlitze (22, 27, 29) derart aufweist, daß das Material (28) zwischen den Schlitzen durch kegelstumpfförmige Elemente (8, 10 oder 8A, 10A), die auf dem Bolzen (3) angebracht sind, nach außen gezwungen werden, wenn das mit Gewinde versehene Element (7, 7A) in Richtung auf das Anschlagelement (6, 34) festgezogen wird.

4. Ankerbolzenanordnung nach Anspruch 1 oder 2, dadurch gekennzeichnet, daß die ausdehnbaren Mittel aus einer rohrförmigen Hülse bestehen, die sich in Längsrichtung erstreckende, sich nur zu einem Ende der Hülse öffnende Schlitze aufweist, oder aus einer Schraubenfeder, die so ausgebildet ist, daß sie nach außen gezwungen wird, wenn sie zwischen ihren Enden zusammengedrückt wird.

5. Ankerbolzenanordnung nach Anspruch 3, dadurch gekennzeichnet, daß die in Längsrichtung verlaufenden Schlitze sich abwechselnd von entgegengesetzten Enden der Röhre (9, 9A) erstrecken.

6. Ankerbolzenanordnung nach Anspruch 5, dadurch gekennzeichnet, daß die in Längsrichtung verlaufenden Schlitze wenigstens im mittleren Bereich (23) der Röhre (9, 9A) verbreitert sind.

7. Ankerbolzenanordnung nach einem der Ansprüche 1 bis 6, dadurch gekennzeichnet, daß das Anschlagelement einen festen Kopf (6) oder eine nahe dem Ende (4) des Bolzens (3) befestigte Sicherungsmutter enthält, so daß die Hülse (9) und das mit Gewinde versehene Element (7) sich innerhalb des genannten Endes befinden.

8. Ankerbolzenanordnung nach einem der Ansprüche 1 bis 7, dadurch gekennzeichnet, daß das Anschlagelement aus einer Mutter oder Sicherungsmutter (34) besteht, die auf eine Grenzposition auf dem mit Gewinde versehenen Ende (4) des Bolzens (3) geschraubt ist, oder aus einem vergrößerten Flansch, der einen Teil des Bolzens selbst bildet.

9. Ankerbolzen zum Verbinden der Innen- und Außenhaut einer Hohlwand, wobei der Ankerbolzen eine erste Ankerbolzenanordnung nach einem der Ansprüche 1 bis 8 umfaßt sowie eine weitere Anordnung an einem von dem vorgenannten Ende abgekehrten Ende, wobei die weitere Anordnung eine ausdehnbare Hülse (13) umfaßt, die zwischen einem Anschlagelement (15) und einer Befestigungsmutter (11) angeordnet ist.

**Revendications**

1. Ensemble de fixation comprenant une vis (3) et un moyen expansible (9) disposé entre une butée (6) et un organe taraudé vissé sur l'extrémité filetée de la vis qui porte un organe de sécurité élastique pourvu de parties saillantes s'étendant au-delà de la périphérie du moyen expansible dans sa position non dilatée, lesdites parties saillantes étant prévues pour empêcher la rotation de l'organe taraudé lorsque l'extrémité précitée se trouve dans un trou juste assez grand pour recevoir ledit moyen expansible, caractérisé en ce que ledit organe de sécurité comprend un tube métallique relativement mince (16, 16A) muni de fentes longitudinales (18), de sorte que lorsque le tube est comprimé, les parties métalliques situées entre ces fentes font saillie vers l'extérieur à la manière de tronçons élastiques (19, 19A) formant lesdites parties saillantes.

2. Ensemble suivant la revendication 1, caractérisé en ce que le tube métallique (16, 16A) est associé positivement ou par frottement à l'organe taraudé (7, 7A).

3. Ensemble suivant l'une quelconque des revendications 1 ou 2, caractérisé en ce que le moyen expansible est constitué par un manchon tubulaire (9, 9A) dans lequel des fentes (22, 27, 29) sont ménagées de telle façon que la matière (28) comprise entre les fentes est déplacée vers l'extérieur par des organes tronconiques (8, 10 ou 8A, 10A) montés sur la vis (3), lorsque l'organe taraudé (7, 7A) est serré vers la butée (6, 34).

4. Ensemble suivant l'une quelconque des revendication 1 ou 2, caractérisé en ce que le moyen expansible comprend soit un manchon tubulaire dans lequel sont ménagées des fentes longitudinales débouchant sur une seule extrémité du manchon, soit un ressort hélicoïdal prévu de manière à se déformer vers l'extérieur lorsque ses extrémités sont soumises à une compression.

5. Ensemble suivant la revendication 3, caractérisé en ce que les fentes longitudinales sont disposées alternativement à partir des bouts opposés du tube (9, 9A).

6. Ensemble suivant la revendication 5, caractérisé en ce que les fentes longitudinales s'élargissent au moins dans la zone centrale (23) du tube (9, 9A).

7. Ensemble suivant l'une quelconque des revendications 1 à 6, caractérisé en ce que les butées sont constituées soit par une tête fixe (6), soit par un écrou de blocage assujetti près de l'extrémité (4) de la vis (3) de sorte que le manchon (9) et l'organe taraudé (7) sont situés vers l'intérieur par rapport à ladite extrémité.

8. Ensemble suivant l'une quelconque des revendications 1 à 7, caractérisé en ce que la butée est constituée soit par un écrou ou écrou de blocage (34) vissé à une position limite sur l'extrémité (4) de la vis (3), soit par une bride élargie formant une partie de la vis.

9. Tige filetée prévue pour coopérer avec les revêtements intérieur et extérieur de la paroi d'une cavité, ladite tige comportant un premier ensemble de fixation suivant l'une quelconque des revendications 1 à 8 et l'autre extrémité de cette tige étant pourvue d'un autre ensemble comprenant un manchon expansible (13) disposé entre une butée (15) et un écrou de serrage (11).

EP 0 182 565 B1

FIG. I.

FIG. 2.

FIG. 3.